# EUROPEAN PATENT APPLICATION

(11) **EP 2 080 644 A1**
(43) Date of publication of application: **22.07.2009**
(21) Application number: 09150866.3
(22) Date of filing: 19.01.2009
(51) Int. Cl.: B60D 1/14, B60D 1/02

(54) **A swivel hitch**

(30) Priority: 18.01.2008 GB 0800947
(71) Applicant: Redrock Engineering limited, 77 Redrock Road Collone Armagh BT60 2BL (GB)
(72) Inventor: Hughes, Samuel, Collone Armagh BT60 2BL (GB)
(74) Representative: McCarthy, Denis Alexis

(57) **Abstract**

A swivel hitch (1) rotatably mountable on a drawbar of a towed implement such as a trailer comprises a towing eye (3), a shank (4) which is axially rotatable relative to the drawbar, and a cranked arm (2) extending between the towing eye and the shank. The cranked arm (2) has an upper end (22) and a lower end (23) which are offset from each other so that the towing eye (3) is vertically offset relative to the longitudinal axis of the shank (4). There is also provided suitable coupling members (55a, 55b, 55c) for connecting the swivel hitch to a drawbar and a device for limiting the degree of rotation of the swivel hitch.

## Description

The present invention relates to a swivel hitch.

Swivel hitches are well known, whereby said swivel hitches are disposed on a towed implement such as a trailer. Commonly, these hitches are provided with a towing eye which engages with a towing hook, pintle hook or similar coupler provided at the rear of a pulling vehicle. The ability of the hitch to swivel enables the hitch to rotate about an axis parallel with the towing vehicle thereby providing oscillation relief and also serves to prevent an overturning trailer from causing the towing vehicle to topple. This facility is particularly useful when the pulling vehicle and towed implement travel off-road. However, when the ground over which the trailer is towed is especially uneven, or where insufficient articulation is available, the couplers on the towing vehicles have a tendency to impart significant forces onto the swivel hitches. These forces not only cause severe wear on both the couplers and the swivel hitch but can also lead to fracture of the towing eye or the towing hook particularly during reversing a turning motion or when the towing vehicle straightens out after such a reversing turning motion.

It is therefore an object of the present invention to alleviate the disadvantages associated with the prior art.

Accordingly, the present invention provides a swivel hitch rotatably mountable on a drawbar provided on a towed implement, the hitch comprising a towing eye, a shank which is axially rotatable relative to the drawbar, a cranked arm extending between the towing eye and the shank, the cranked arm having an upper end and a lower end which are offset from each other so that the towing eye is vertically offset relative to the longitudinal axis of the shank.

The towing means may be vertically offset or both vertically and horizontally offset relative to the longitudinal axis of the shank.

Preferably, the towing means comprises a towing eye.

Conveniently, the cranked arm has an upper end and a lower end, each end offset substantially vertically from each other.

Preferably, the upper end and the lower end of the cranked arm are offset substantially laterally from each other.

Ideally, the upper end forms a neck which merges with the towing eye.

Preferably, the lower end blends with a substantially vertical face from which the shank projects perpendicularly.

Optionally, the lower end blends into a body section from which the shank projects perpendicularly.

In a preferred arrangement, the cranked arm is a substantially curved member.

Advantageously, the cranked arm increases the 'throw' or degree of articulation available to the swivel hitch.

Conveniently, the shank is adapted to rotatably engage with a suitable coupling member which connects the offset swivel hitch to a drawbar.

### Advantageously, the shank is axially rotatable within the coupling member

Ideally, the coupling member is provided with an aperture through which the shank extends.

Conveniently, the coupling member is adapted to be fastened to the towed implement by welding or other suitable means.

Advantageously, the coupling member is provided with grease nipples or similar means to enable the application of lubricant to the interior of said coupling member.

Advantageously, the shank is provided at its distal end with means for receiving a complementary retaining means.

Optionally, the means for receiving a complementary retaining means is a segment having a reduced cross-section. In this case the complementary retaining means comprises a first section and a second section, the sections adapted to clamp around the reduced cross-section segment and to act a boss to prevent the offset swivel hitch from detaching from the coupling member.

Optionally, an alternative means for receiving a complementary retaining means comprises a threaded portion adapted to receive a nut.

Optionally, an alternative complementary retaining means comprises a collar.

Optionally, the shank is provided with a tapered section which divides the shank into distinct segments.

In an alternative embodiment of the offset swivel hitch the shank and cranked arm are separable components.

Ideally, the separable shank comprises a reduced diameter section and a retaining boss at its respective ends.

Conveniently, the reduced diameter section of the shank is provided with a threaded terminal end.

Preferably, the cranked arm extends from a body section, the body section being provided with an aperture adapted for receiving the reduced diameter section of the separable shank.

In accordance with a further aspect of the invention, there is provided a means to limit the degree of rotation of a swivel hitch of the invention, thereby preventing said hitch from inverting and being incorrectly coupled to a towing vehicle.

Preferably, the means to limit the degree of rotation of a swivel hitch comprises a rear plate and a front plate, the rear plate being fixed to a drawbar and the front plate being rotatably mounted to the rear plate.

Advantageously, the front plate is rotatably mounted to the rear plate by means of a shear bolt.

Conveniently, the front plate comprises a lower edge which in use is suspended above an upper edge of the swivel hitch body or an upper edge of the cranked arm such that a spaced apart relationship between the respective upper and lower edges is maintained when the swivel hitch is in a substantially upright position.

Advantageously, rotation of an uncoupled swivel hitch through a predetermined angle eventually causes the lower edge of the front plate and the upper edge of the swivel hitch body or cranked arm to come into contact such that upon full abutment of the respective edges further rotating motion of the swivel hitch is retarded as it wedges against the front plate. Thus the swivel hitch is maintained in a non-inverted orientation and therefore cannot be coupled to a towing hook while in an upside down orientation.

The invention will hereinafter be more particularly described with reference to the accompanying drawings which show, by way of example only, a number of embodiments of an offset swivel hitch and coupling means of the invention.

In the drawings:
Figure 1 is a schematic illustration of a first embodiment of an offset swivel hitch and retaining member in accordance with the invention;
Figure 2 is an isometric view of a second embodiment of an offset swivel hitch of the invention adapted for receiving an alternative retaining means;
Figure 3a is an isometric view of a third embodiment of an offset swivel hitch of the invention and adapted for receiving a further alternative retaining means.
Figure 3b is a side elevation of the third embodiment of an offset swivel hitch of the invention;
Figure 3c is a plan view of the third embodiment of an offset swivel hitch of the invention;
Figure 3d is an end elevation of the third embodiment of an offset swivel hitch of the invention;
Figure 4a is an isometric view of a fourth embodiment of an offset swivel hitch of the invention;
Figure 4b is a side elevation of the fourth embodiment of an offset swivel hitch of the invention;
Figure 4c is an end elevation of the third embodiment of an offset swivel hitch of the invention;
Figure 4d is a plan view of the third embodiment of an offset swivel hitch of the invention;
Figure 5a is a side elevation of a fifth embodiment of an offset swivel hitch of the invention;
Figure 5b is a plan view of the fifth embodiment of an offset swivel hitch of the invention;
Figure 5c is an end elevation of the fifth embodiment of an offset swivel hitch of the invention;
Figure 5d shows a separable shank of the fifth embodiment of an offset swivel hitch of the invention;
Figures 6a to 6d are illustrations of alternative coupling members of the invention;
Figure 7a and 7b are schematic illustrations showing the alternative coupling members placed at various alternative positions on a drawbar;
Figures 8a to 8c show a swivel hitch rotation limiting means; and
Figures 9a to 9c show the swivel hitch rotation limiting means in operation.

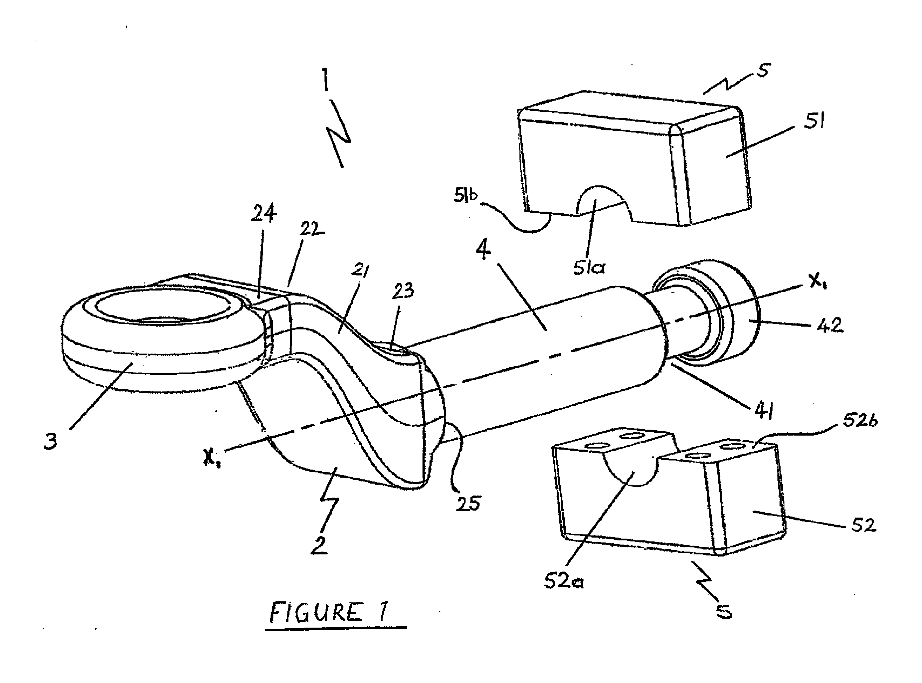

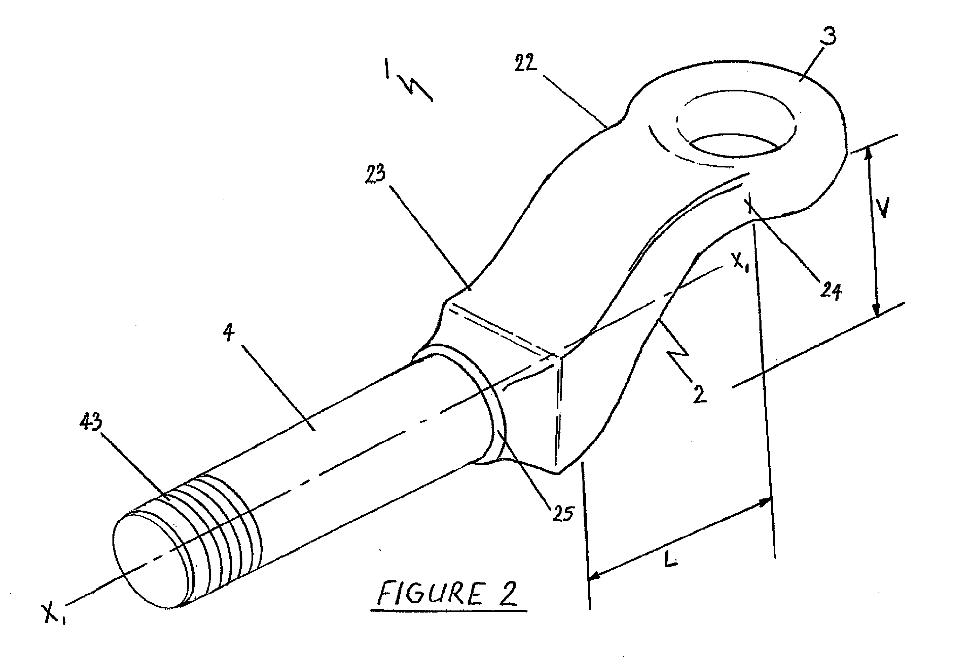

Referring initially to Figure 1 and Figure 2, an offset swivel hitch 1 comprises a cranked arm 2 which extends between a towing eye 3 and a shank 4 such that the towing eye lies in a plane which is vertically offset relative the longitudinal axis X₁-X₁ of the shank 4. In Figure 1 an example of a retaining member 5 for securing the offset swivel hitch 1 to a coupling member which connects the hitch to the drawbar of a towed implement is also shown.

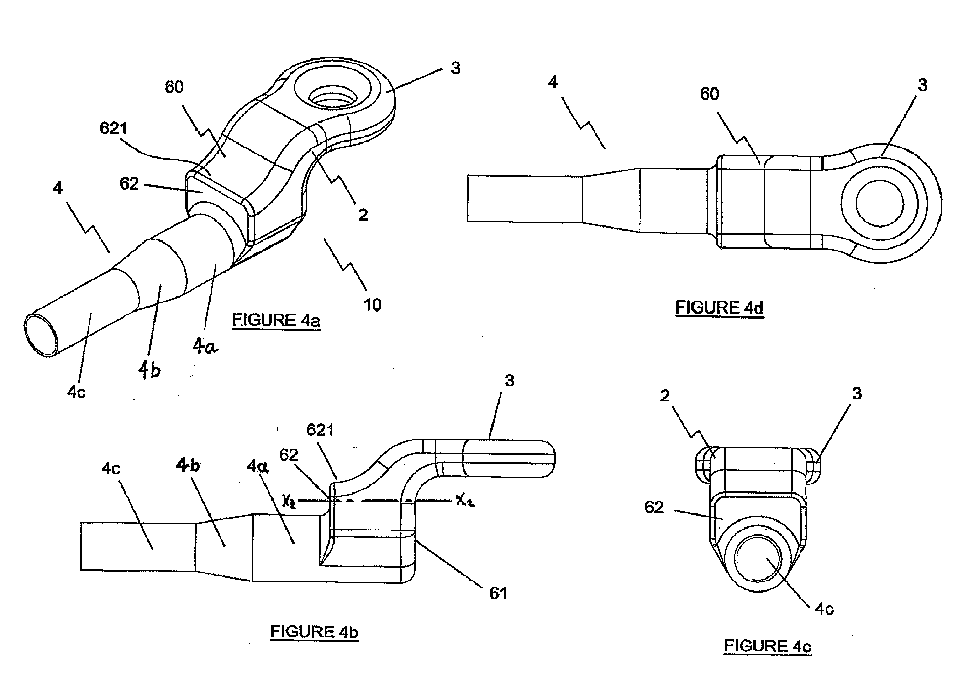

Retaining member 5 comprises a clamp device having a first section 51 and a second section 52 which are each provided with annular surface 51a, 52a which define an aperture when the respective upper and lower sections are mated together. In use, the respective first and second sections 51, 52 of coupling member 5 are placed around the reduced cross-section segment 41 provided at the distal end of shank 4 once said shank has been placed through an aperture 61, 62 provided through a suitable coupling member 55a, 55b (see Figures 4a and 4b). By clamping the first and second sections 51, 52 together using bolts or other suitable means the swivel hitch of the first embodiment is retained in engagement with the respective coupling member 55a, 55b with retaining member 5 acting as a boss which prevents said hitch detaching from the coupling member. When mounted to the clamp device shank 4 is able to axially rotate thereby allowing the hitch to swivel.

In Figure 1 and Figure 2, cranked arm 2 comprises a substantially curved member 21 having an upper end 22 and a lower end 23, each end being substantially quadrilateral in cross-section and offset both laterally and vertically from each other, with the upper end 22 forming a neck 24 that merges with towing eye 3 and the lower end 23 blending with a substantially vertical face 25 from which shank 4 projects perpendicularly.
In Figure 2 the lateral (L) and vertical (V) offsets are indicated.

Referring to Figure 2, in a second embodiment the offset swivel hitch 1 is provided with an alternative means for attachment to a coupling member 5 which enables convenient and rapid manual decoupling of the swivel hitch from said coupling member. In this embodiment the distal end of shank 4 is provided with a threaded portion 43 so that when said shank is placed through a complementary aperture 61, 62 provided through a suitable coupling member 55a, 55b, respectively (Figures 4a and 4b), a threaded retaining collar (not shown) can be attached to said distal end thereby retaining it in place.

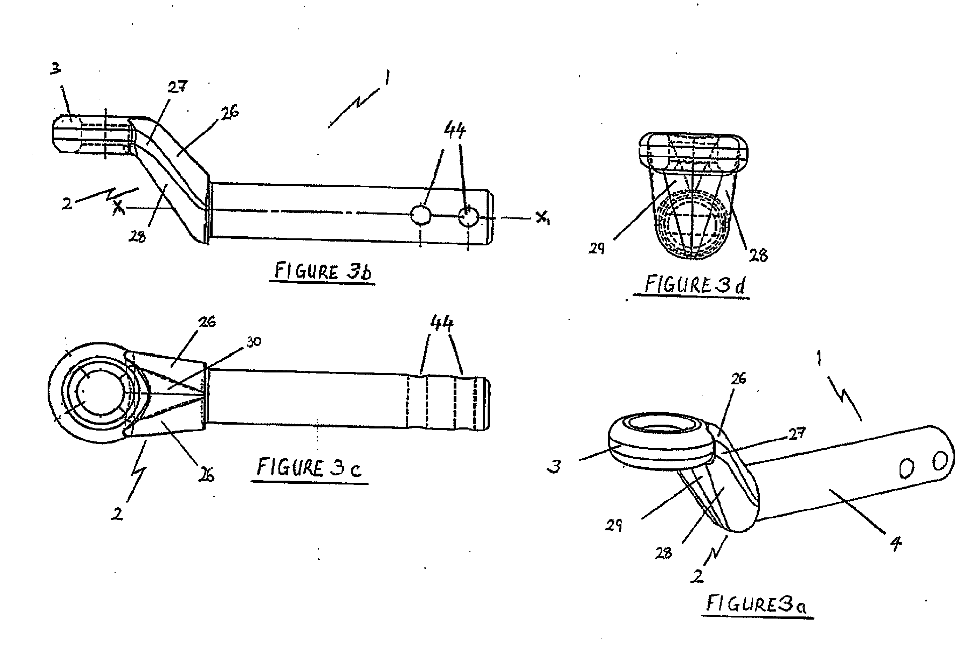

Referring now to Figures 3a to 3d, in a third embodiment offset swivel hitch 1 there is provided with a further alternative means for convenient and rapid manual decoupling of the swivel hitch from the coupling member. In this embodiment, the distal end of shank 4 is provided with a plurality of through-apertures 44 which extend transversely through the longitudinal axis of said shank. In this arrangement, and with shank 4 placed through a complementary aperture 61, 62 provided through a suitable coupling member 55a, 55b, respectively (Figures 4a and 4b), a retaining ring (not shown) can be fastened to the distal end using bolts, pins or other suitable means.

It will be appreciated that while the offset swivel hitches of Figures 1 to 3 comprise a cranked arm 2 comprising a substantially curved member 21 having an upper end 22 and a lower end 23, each end being substantially quadrilateral in cross-section, it is possible that cranked arms having a range of suitable geometries, vertical and horizontal offsets and shapes may be employed. For example, in Figures 3a to 3d, there is shown an offset swivel hitch 1 having a cranked arm 2 comprising a number of facets 26, 27, 28, 29 and 30 having varying respective sizes and shapes and in Figures 4a to 4d there is shown an offset swivel hitch 10 having a vertical offset that is substantially reduced.

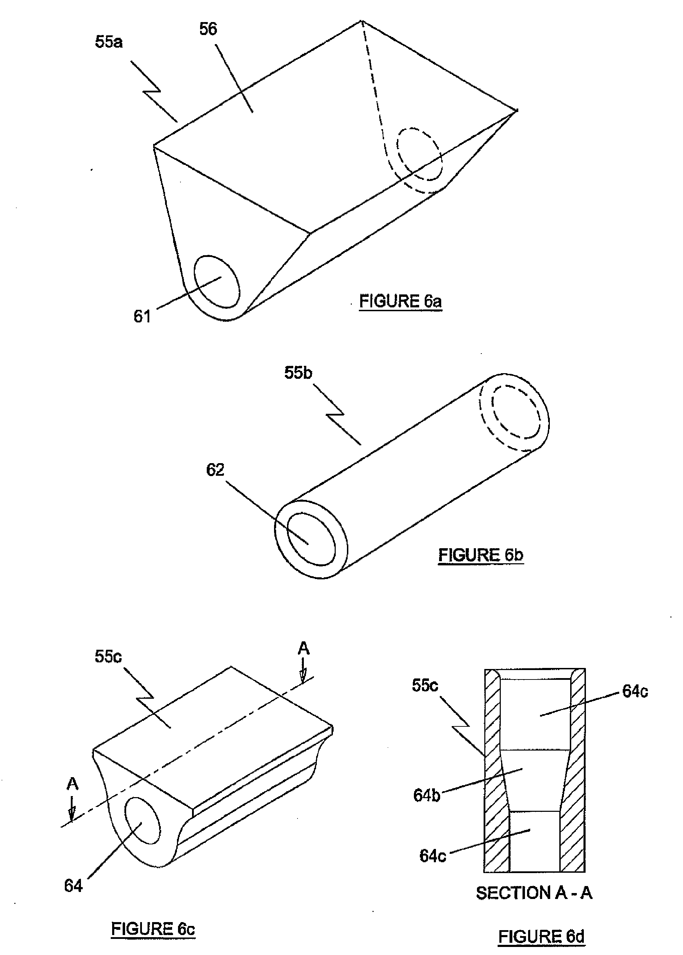

In Figures 4a to 4d there is shown a fourth embodiment offset swivel hitch 10 comprising a cranked arm 2 which extends between towing eye 3 and a body section 60 such that the towing eye lies in a plane which is vertically offset relative the longitudinal axis X₂ - X₂ (Figure 4b) of body section 60. Body section 60 comprises a front face 61 and a rear face 62, rear face 62 being arranged substantially perpendicularly to the longitudinal axis of said body section and having a substantially planar upper edge 621. In this embodiment shank 4, which blends into body section 60, comprises a tapered section 4b which divides the shank into distinct segments 4a and 4c wherein segment 4c has a lesser diameter than segment 4a. A suitable coupling member 55c adapted to receive such a shank is shown in Figures 6c and 6d. Shank 4 is be provided at its terminal end with a means (not shown) for receiving a suitable retaining member or collar as described previously.

In use, the provision of a rotatable cranked arm 2 increases the 'throw' or degree of articulation of the swivel hitch 1 thus serving to reduce the likelihood of a towed implement from tipping and overturning the towing vehicle as the towing vehicle turns or changes direction particularly during travel over rough terrain or during reversing motion on a sloped surface. During such reversing motion, during travel over rough or sloped terrain, or when the degree of articulation would otherwise be insufficient, the degree of axial rotation through which the shank must travel before load components placed on the towing eye 3 by the coupling device or towing hook of the towing vehicle begin to impart a lifting or tipping effect on the towed implement to which the hitch is fitted, is increased. The provision of a rotatable cranked arm also has the effect of reducing the shear forces experienced by shank 4 during such circumstances and further serves to reduce wear imparted on both towing eye 3 and the coupling device fitted to the towing vehicle. Furthermore, the provision of a cranked arm ensures that the weight of the towed implement is transferred more effectively to the towing eye 3 which will tend to seat more squarely on the towing hook and remain in a plane substantially perpendicular to said towing hook and substantially parallel with the ground throughout a greater range of vehicle motion. This tendency of the towing eye 3 to remain in a plane perpendicular to the towing hook and substantially parallel with the ground reduces the likelihood of the towing eye twisting about or buckling around said towing hook thereby reducing the stresses experienced by each thus decreasing component wear and the likelihood of fracture.

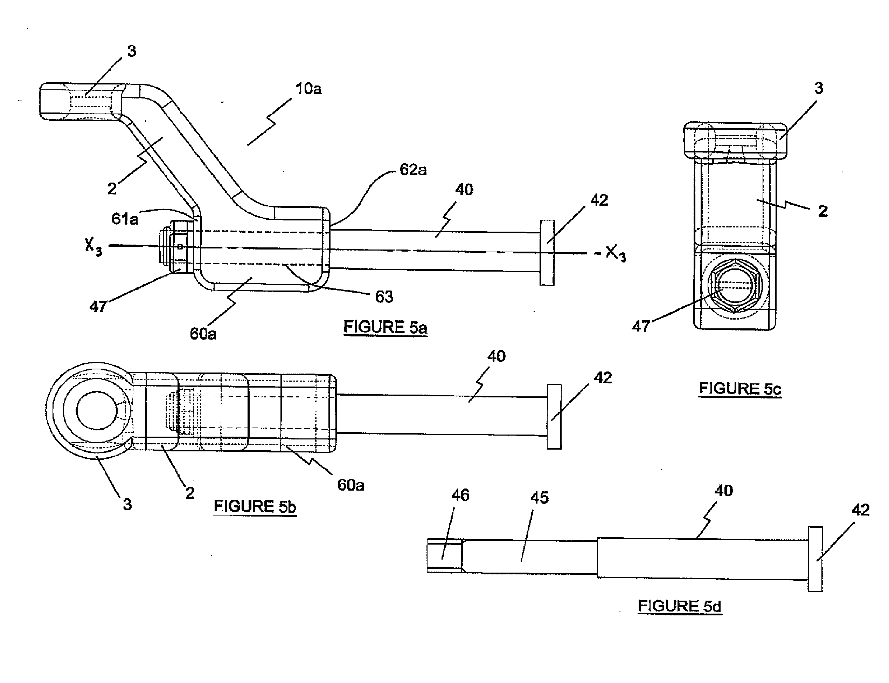

While it is envisaged that the aforementioned embodiments of the offset swivel hitch are singular components produced by forging, it is also possible that the offset swivel hitch may comprise a modular device as shown in Figures 5a to 5d and described below.

In a fifth embodiment an offset swivel hitch 10a comprises a cranked arm 2 which extends between a towing eye 3 and a body section 60a such that the towing eye lies in a plane which is vertically offset relative the longitudinal axis X3 -X₃ of body section 60a. Body section 60a comprises a front face 61a and a rear face 62a, which are arranged perpendicularly to the longitudinal axis of said body section 60a. Extending perpendicularly between the front and rear faces 61a, 62a there is also provided an aperture 63 through which a separate shank 40 is inserted. Shank 40 comprises a elongate shaft having a reduced diameter portion 45 and a retaining boss 42 at its respective ends, the reduced diameter portion 45 adapted for insertion through aperture 63 and further comprising a threaded terminal end 46. In use offset swivel hitch 10a is attached to a suitable coupling member 55a, 55b by placing shank 40 through said coupling member and then placing body section 60a on to said shank and fastening it with a suitable fastener 47 which is applied to threaded terminal end 46.

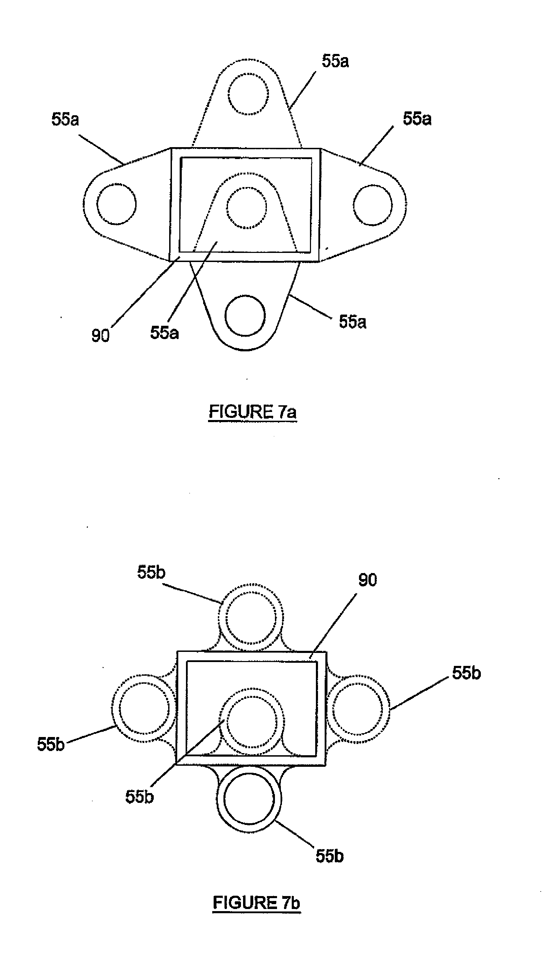

With reference to Figures 6a 6b, 6c and 6d there are shown, by way of example only, suitable coupling members 55a, 55b and 55c to enable attachment of the embodiments of the offset swivel hitch to a drawbar. In Figure 6a coupling member 55a is provided with an aperture 61 through which a shank 4, 40 is placed, the aperture 61 having a diameter which allows the shank to rotate freely about its longitudinal axis. Coupling member 55a is further provided with a substantially planar upper surface 56 which is adapted to lie flush against the underside of a drawbar to which said coupling member is affixed. In Figure 6b coupling member 55b comprises a tubular member having a bore 62 though which a shank 4, 40 is placed, the bore 62 being sized to allow shank 4 rotate freely about its longitudinal axis. In Figure 6c coupling member 55c is provided with a through-hole 64 through which a shank 4 is placed. As shown in Figure 6d which is a cross-sectional view of coupling member 55c in the direction A-A, through-hole 64 is provided with a tapered section 64b which divides the through-hole into distinct segments 64a and 64c which provide a complementary fit for the shank of the fourth embodiment of the swivel hitch as described above and shown in Figures 4a to 4d. Connection of coupling members which may be placed at various alternative positions on or within a drawbar 90 as shown schematically by way of example in Figures 7a and 7b, is effected by welding or other suitable means. While not illustrated in the figures it is envisaged that coupling members 55a, 55b and 55c are each provided with grease nipples or similar means to enable the application of lubricant to the interior of said coupling members.

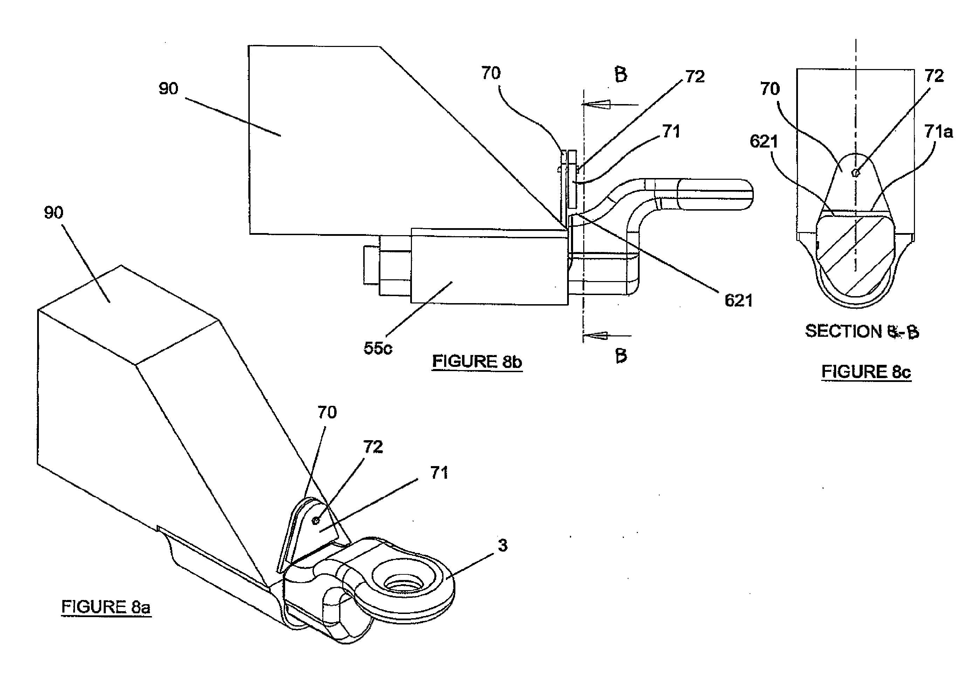

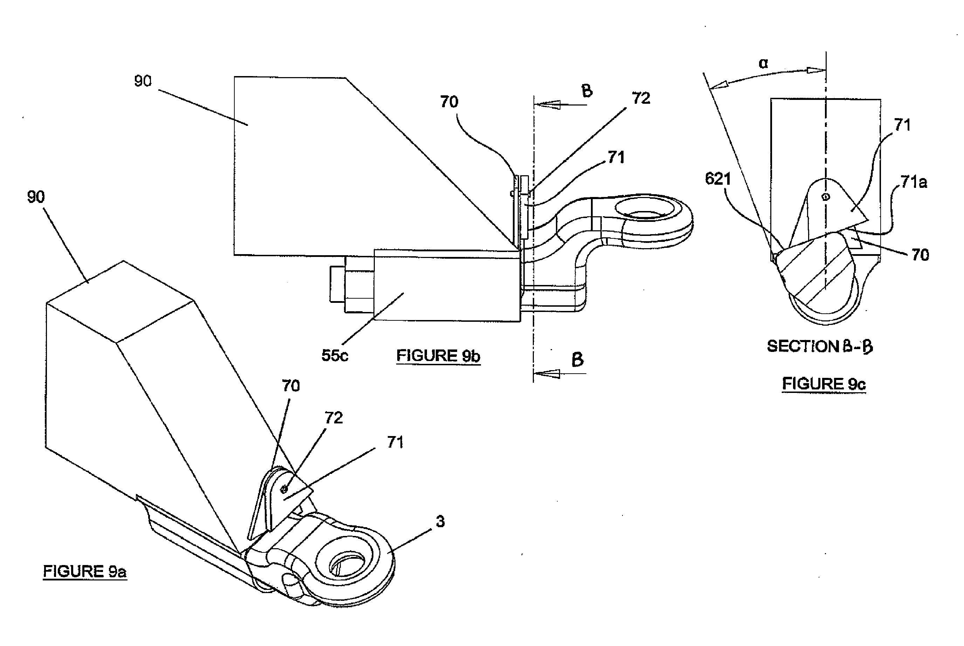

As an uncoupled swivel hitch will have a natural tendency to take up an inverted position (i.e. with the towing eye lying below the longitudinal axis of the shank of the swivel hitch) it is possible that an operator may couple the offset swivel hitch to the towing hook of a towing vehicle while the swivel hitch is inverted. Should the swivel hitch be coupled to the towing hook in such an incorrect upside-down manner the weight of the towed implement will tend to force the swivel hitch to return to a correct in-use orientation with the towing eye orientated above the longitudinal axis of the shank. In this eventuality towing eye 3 will twist or buckle against the towing hook with great force thereby imparting significant stress on both components which could cause component fracture or other damage to the swivel hook, the coupling member or the coupler on the towing vehicle. One possible means of avoiding this problem is to place markings on the swivel hitch indicating the correct mode of orientation or use. Another possible way of avoiding this problem is by providing the swivel hitch with self-righting means such as a spring biasing means which will automatically return an uncoupled swivel hitch to an upright position from an inverted position. Alternatively, there is shown in Figures 8a to 8c and Figures 9a to 9c a means to limit the degree of rotation of an uncoupled offset swivel hitch thereby preventing a swivel hitch of the invention from inverting and thereby preventing the offset swivel hitch from being incorrectly coupled to a towing vehicle as described above. While the following description relates specifically to the fourth embodiment of the swivel hitch (illustrated in Figures 4a to 4d), it should be appreciated that the rotation limiting device can be used, or can be readily adapted for use, with any of the other embodiments of the offset swivel hitch disclosed herein.

Figures 8a to 8c and Figures 9a to 9c show a swivel hitch 10 connected to the underside of a drawbar 90 via a suitable coupling member 55c. The swivel hitch rotation limiting means provided on drawbar 90 comprises a rear plate 70 that is welded to a drawbar and a front plate 71 that is rotatably mounted to the rear plate 70 by means of a shear bolt 72. Front plate 71 is provided with a substantially flat lower edge 71a which is suspended above a substantially planar upper edge 621 of swivel hitch body 60 such that a spaced apart relationship between the respective edges is maintained when the swivel hitch 10 is in a substantially upright position as shown in Figures 8b and 8c. Should an uncoupled swivel hitch 10 rotate about its longitudinal axis to take up an inverted position as described previously, the substantially planar upper edge 621 of the swivel hitch will eventually come into contact with the substantially flat lower edge 71 a of front plate 71 as shown in Figures 9a to 9c. Once the swivel hitch has rotated through a predetermined angle α (Figure 9c), the respective contacting edges 71 a, 621 will be in full abutment and so further rotating motion of the swivel hitch is retarded as it wedges against front plate 71. Thus the swivel hitch is maintained in a non-inverted orientation and therefore cannot be coupled to a towing hook while in an upside down orientation. Should angle α be exceeded while the swivel hitch is coupled to a towing vehicle, shear bolt 72 will shear thereby preventing the rotation limiting means from sustaining excessive damage.

It is thought that the present invention and its advantages will be understood from the foregoing description and it will be apparent that various changes may be made thereto without departing from the spirit and scope of the invention, the forms hereinbefore described being merely preferred or exemplary embodiments thereof.

## Claims

1. A swivel hitch (1) rotatably mountable on a drawbar provided on a towed implement, the hitch comprising a towing eye (3), a shank (4) which is axially rotatable relative to the drawbar, and a cranked arm (2) extending between the towing eye and the shank, the cranked arm having an upper end (22) and a lower end (23) which are offset from each other so that the towing eye (3) is vertically offset relative to the longitudinal axis of the shank.

2. A swivel hitch as claimed in Claim 1, wherein the upper end (22) and the lower end (23) of the cranked arm (2) are offset laterally from each other.

3. A swivel hitch as claimed in Claim 1 or Claim 2, wherein the upper end (22) of the cranked arm (2) forms a neck (24) which merges with the towing eye (3).

4. A swivel hitch as claimed in Claim 1 or Claim 2, wherein the lower end (23) of the cranked arm (2) blends with a substantially vertical face (25) from which the shank projects perpendicularly;
optionally wherein the lower end (23) blends into a body section (60) from which the shank projects perpendicularly.

5. A swivel hitch as claimed in any one of the preceding claims, wherein the cranked arm (2) is a substantially curved member.

6. A swivel hitch as claimed in any one of the preceding claims, wherein the cranked arm (2) increases the 'throw' or degree of articulation available to the swivel hitch.

7. A swivel hitch as claimed in any one of the preceding claims, wherein the shank (2) is adapted to rotatably engage with a suitable coupling member (5, 55a, 55b, 55c) which connects the offset swivel hitch (1) to a drawbar;
optionally wherein the coupling member is provided with an aperture (61, 62, 64) through which the shank extends;
optionally wherein the coupling member is adapted to be fastened to the towed implement by welding or other suitable means;
and optionally wherein the coupling member is provided with grease nipples or similar means to enable the application of lubricant to the interior of said coupling member.

8. A swivel hitch (1) as claimed in any one of the preceding claims, wherein the shank (4) is provided at its distal end with means for receiving a complementary retaining means;
optionally wherein the means for receiving a complementary retaining means is a segment (41) having a reduced cross-section,
and optionally wherein the means for receiving a complementary retaining means comprises a threaded portion (43) adapted to receive a nut.

9. A swivel hitch (1) as claimed in Claim 8, wherein the complementary retaining means comprises a first section (51) and a second section (52), the first and second sections adapted to clamp around the reduced cross-section segment (41) and to act a boss to prevent the offset swivel hitch from detaching from the coupling member;
optionally wherein the complementary retaining means comprises a collar.

10. A swivel hitch (10) as claimed in any one of the preceding claims, wherein the shank (4) is provided with a tapered section (4b) which divides the shank into distinct segments (4a, 4c).

11. A swivel hitch (10a) as claimed in any one of the preceding claims, wherein the shank (4) and cranked arm (2) are separable components;
optionally wherein the separable shank (40) comprises a reduced diameter section (45) and a retaining boss (42) at its respective ends; and optionally wherein the reduced diameter section of the shank is provided with a threaded terminal end (46).

12. A swivel hitch (10a) as claimed in Claim 11, wherein the cranked arm extends from a body section (60a), the body section being provided with an aperture (63) adapted for receiving the reduced diameter section (45) of the separable shank.

13. A swivel hitch (1, 10, 10a) as claimed in any one of the preceding claims, which is provided with means to limit the degree of rotation of the swivel hitch, thereby preventing said hitch from inverting and being incorrectly coupled to a towing vehicle;
optionally wherein the means to limit the degree of rotation of a swivel hitch comprises a rear plate (70) and a front plate (71), the rear plate being fixed to a drawbar and the front plate being rotatably mounted to the rear plate;
and optionally wherein the front plate is rotatably mounted to the rear plate by means of a shear bolt (72).

14. A swivel hitch as claimed in Claim 13, wherein the front plate (71) comprises a lower edge (71a) which in use is suspended above an upper edge (621) of the swivel hitch body or an upper edge of the cranked arm (2) such that a spaced apart relationship between the respective upper and lower edges is maintained when the swivel hitch is in a substantially upright position.

15. A swivel hitch as claimed in any one of Claims 13 to 14, wherein rotation of an uncoupled swivel hitch through a predetermined angle (α) causes the lower edge of the front plate (71a) and the upper edge of the swivel hitch body or cranked arm to come into contact, so that upon full abutment of the respective edges further rotating motion of the swivel hitch is retarded as it wedges against the front plate (71), whereby the swivel hitch is maintained in a non-inverted orientation and cannot be coupled to a towing hook while in an upside down orientation.
